(19) Europäisches Patentamt
European Patent Office
Office européen des brevets

(11) **EP 3 306 512 B1**

(12) **EUROPEAN PATENT SPECIFICATION**

(45) Date of publication and mention of the grant of the patent:
**03.06.2020 Bulletin 2020/23**

(21) Application number: **16802418.0**

(22) Date of filing: **28.04.2016**

(51) Int Cl.:
*H04W 12/12* (2009.01)   *H04L 29/06* (2006.01)
*G06F 21/57* (2013.01)   *H04W 12/06* (2009.01)

(86) International application number:
**PCT/CN2016/080446**

(87) International publication number:
**WO 2016/192495 (08.12.2016 Gazette 2016/49)**

(54) **ACCOUNT THEFT RISK IDENTIFICATION METHOD, IDENTIFICATION APPARATUS, AND PREVENTION AND CONTROL SYSTEM**

VERFAHREN ZUR IDENTIFIZIERUNG DES KONTODIEBSTAHLRISIKOS, IDENTIFIZIERUNGSVORRICHTUNG SOWIE VERHINDERUNGS- UND KONTROLLSYSTEM

PROCÉDÉ D'IDENTIFICATION DE RISQUE DE VOL DE COMPTE, APPAREIL D'IDENTIFICATION, ET SYSTÈME DE PRÉVENTION ET DE COMMANDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.05.2015 CN 201510289825**

(43) Date of publication of application:
**11.04.2018 Bulletin 2018/15**

(73) Proprietor: **Alibaba Group Holding Limited Grand Cayman (KY)**

(72) Inventor: **TAN, Chunping Hangzhou 310099 (CN)**

(74) Representative: **Conroy, John Fish & Richardson P.C. Highlight Business Towers Mies-van-der-Rohe-Straße 8 80807 München (DE)**

(56) References cited:
**CN-A- 1 497 450       CN-A- 1 801 764
CN-A- 102 325 062    CN-A- 103 297 444
CN-A- 104 618 919    US-B1- 8 904 496**

**Description**

**Technical Field**

The present application relates to network security technologies, and in particular, to an account theft risk identification method, identification apparatus, and prevention and control system.

**Background Art**

Online transaction, mobile payment and other applications, while bringing convenience to users, also have prominent security risks. If an account is stolen, a user not only may suffer a property loss, but also may have to take the risk of illegal behaviors conducted by an account stealer using the stolen account. How to promptly and effectively identify whether an account is stolen to provide a network environment as secure as possible for users is an important problem that a network application service provider cannot avoid and has to solve. Many account theft risk identification solutions are proposed in the prior art, which are briefly described below with examples.

One type of solutions is to identify an account theft risk by monitoring whether a transaction request of a transaction user is abnormal. For example, it is detected whether a user logs in to the account at a remote place, and the user needs to be verified if remote login occurs; if the verification is unsuccessful, the user account will be blocked. Remote login is a common manifestation of account theft. Therefore, monitoring remote login requests helps identify the account theft risk in time. However, since a network operator may change its own IP address pool especially during IP address allocation between cities, a normal user may be identified as a risk user, which may result in a relatively high error rate in account theft identification.

Another type of solutions is to identify an account theft risk by monitoring a key device. For example, the number of transaction users logging on to a transaction logon device is counted and used as an input variable of a scoring model for identifying an account theft risk, thereby evaluating an account theft risk level of this device. If there are relatively few transaction users on a device, the probability of the account theft risk is relatively low; otherwise, if there are lots of transaction users on the device, the probability of the account theft risk is significantly increased. Therefore, account theft events can be identified to some extent by mainly monitoring such a type of devices having lots of transaction users. However, the distinguishing capability and stability of the variable, i.e., the number of transaction users on the device, are relatively poor, and for a normal single-device multi-user transaction situation, this solution tends to cause an identification error.

Account theft risk identification solutions for other network operation behaviors usually have problems of misjudgments and false negatives as well, and the account theft risk distinguishing capability thereof is not high enough, resulting in an unsatisfactory overall effect of these solutions. Therefore, it is necessary to design a new account theft risk identification solution.

US 8,904,496 describes a method and system for use in authenticating an entity in connection with a computerized resource. An authentication request is received from entity for access to computerized resource. An input signal is received from a communications device associated with entity. The input signal comprises current location of communications device. The current location of communications device is derived from input signal. A location history in connection with communications device is captured. The location history comprises a record of discrete locations visited by communications device over a period of time. An analysis is performed between current location of the communications device and location history in connection with communications device. An authentication result is generated based on analysis between current location of communications device and location history in connection with communications device. The authentication result can be used for authenticating entity.

**Summary of the Invention**

In view of the defects in the prior art, an objective of the present application is to provide an account theft risk identification method, identification apparatus, and prevention and control system, to effectively improve the capability of distinguishing an account theft risk.

To solve the foregoing technical problem, the present application provides an account theft risk identification method, including:

collecting device information of a device that bears an operation behavior according to information about the current operation behavior;

acquiring all user identity information of historical operation behaviors on the device within a preset time period prior to the current operation behavior;

analyzing a user identity analysis location represented in each piece of user identity information, and counting the number of user identity analysis locations on the device in the time period; and

determining whether the current operation behavior has an account theft risk according to the number of user identity analysis locations on the device in the time period.

Preferably, the user identity information includes credential information in user registration information; and the step of analyzing a user identity analysis location represented in each piece of user identity information, and counting the number of user identity analysis locations on the device in the time period specifically includes: acquiring the user identity analysis location such a type of devices having lots of transaction users. However, the distinguishing capability and stability of the variable, i.e., the number of transaction users on the device, are relatively poor, and for a normal single-device multi-user transaction situation, this solution tends to cause an identification error.

Account theft risk identification solutions for other network operation behaviors usually have problems of misjudgments and false negatives as well, and the account theft risk distinguishing capability thereof is not high enough, resulting in an unsatisfactory overall effect of these solutions. Therefore, it is necessary to design a new account theft risk identification solution.

**Summary of the Invention**

In view of the defects in the prior art, an objective of the present application is to provide an account theft risk identification method, identification apparatus, and prevention and control system, to effectively improve the capability of distinguishing an account theft risk.

To solve the foregoing technical problem, the present application provides an account theft risk identification method, including:

collecting device information of a device that bears an operation behavior according to information about the current operation behavior;

acquiring all user identity information of historical operation behaviors on the device within a preset time period prior to the current operation behavior;

analyzing a user identity analysis location represented in each piece of user identity information, and counting the number of user identity analysis locations on the device in the time period; and

determining whether the current operation behavior has an account theft risk according to the number of user identity analysis locations on the device in the time period.

Preferably, the user identity information includes credential information in user registration information; and the step of analyzing a user identity analysis location represented in each piece of user identity information, and counting the number of user identity analysis locations on the device in the time period specifically includes: acquiring the user identity analysis location according to a credential type and a credential number in each piece of user registration information, and counting the number of user identity analysis locations on the device.

Preferably, the step of acquiring the user identity analysis location according to a credential type and a credential number in each piece of user registration information, and counting the number of user identity analysis locations on the device includes:

determining an analysis mode for the user identity analysis location according to a class of the credential type; and

analyzing the first six digits of each credential number to acquire the user identity analysis location when the credential type is a Chinese domestic resident ID card, and counting the number of user identity analysis locations on the device accordingly; or

presuming that each credential type or each credential number corresponds to one user identity analysis location when the credential type is a Chinese domestic non-resident ID card or a foreign credential, and counting the number of user identity analysis locations on the device accordingly.

Preferably, the step of collecting device information of a device that bears an operation behavior according to information about the current operation behavior includes: acquiring corresponding device information of the device by collecting a device identification code of the device.

Preferably, the step of acquiring corresponding device information of the device by collecting a device identification code of the device includes:

determining content of the collected device information according to a type of the device;

wherein the collected device information includes a MAC, an IP and/or a UMID when the device is a PC; and

the collected device information includes a MAC, an IMEI, a TID and/or a mobile phone number when the device is a mobile terminal.

Preferably, the step of acquiring corresponding device information of the device by collecting a device identification code of the device includes:

determining a mode of counting the number of user identity analysis locations on the device according to a device quantity identified from the device identification code;

analyzing and counting, when a unique device is identified, the number of user identity analysis locations on the device; or

analyzing and counting, when multiple devices are identified, the number of user identity analysis locations on each device; or

setting the number of user identity analysis locations on the device as 0 when no device is identified; and

using the obtained number of user identity analysis locations on the device as an input variable of a preset scoring model, to evaluate an account theft risk level of the device.

Preferably, the step of determining whether the current operation behavior has an account theft risk according to the number of user identity analysis locations on the device in the time period includes: evaluating an account theft risk level of a user of the current operation behavior in combination with the total number of users on the device, the number of mobile phone numbers bound to the user of the current operation behavior, the number of devices for historical operation behaviors of the current user, the number of IP addresses of the historical operation behaviors of the current user, a difference between the information about the current operation behavior and information about the historical operation behaviors of the current user, and/or whether routing characteristic information of the current operation behavior is the same as routing characteristic information of the historical operation behaviors.

Preferably, the step of determining whether the current operation behavior has an account theft risk according to the number of user identity analysis locations on the device in the time period further includes: calculating an account theft risk value in combination with the account theft risk level of the device and the account theft risk level of the user of the current operation behavior, and identifying an account theft when the risk value is greater than a preset threshold.

Based on this, the present application further provides an account theft risk identification apparatus, including:

a device information collection module configured to collect device information of a device that bears an operation behavior according to information about the current operation behavior;

a user information acquisition module configured to acquire all user identity information of historical operation behaviors on the device within a preset time period prior to the current operation behavior;

a user identity analysis module configured to analyze a user identity analysis location represented in each piece of user identity information, and count the number of user identity analysis locations on the device in the time period; and

an account theft risk evaluation module configured to determine whether the current operation behavior has an account theft risk according to the number of user identity analysis locations on the device in the time period.

Preferably, the user identity information includes credential information in user registration information; and the user identity analysis module acquires the user identity analysis location according to a credential type and a credential number in each piece of user registration information, and counts the number of user identity analysis locations on the device.

Preferably, the user identity analysis module determines an analysis mode for the user identity analysis location according to a class of the credential type; and analyzes the first six digits of each credential number to acquire the user identity analysis location when the credential type is a Chinese domestic resident ID card, and counts the number of user identity analysis locations on the device accordingly; or presumes that each credential type or each credential number corresponds to one user identity analysis location when the credential type is a Chinese domestic non-resident ID card or a foreign credential, and counts the number of user identity analysis locations on the device accordingly.

Preferably, the device information collection module acquires corresponding device information of the device by collecting a device identification code of the device.

Preferably, the device information collection module determines content of the collected device information according to a type of the device, wherein the collected device information includes a MAC, an IP and/or a UMID when the device is a PC; and the collected device information includes a MAC, an IMEI, a TID and/or a mobile phone number when the device is a mobile terminal.

Preferably, the user identity analysis module determines a mode of counting the number of user identity analysis locations on the device according to a device quantity identified by the device information collection module from the device identification code; analyzes and counts, when a unique device is identified, the number of user identity analysis locations on the device; or analyzes and counts, when multiple devices are identified, the number of user identity analysis locations on each device; or sets the number of user identity analysis locations on the device as 0 when no device is identified; and uses the obtained number of user identity analysis locations on the device as an input variable of a preset scoring model of the account theft risk evaluation module, to evaluate an account theft risk level of the device.

Preferably, the account theft risk evaluation module evaluates an account theft risk level of a user of the current operation behavior in combination with the total number of users on the device, the number of mobile phone numbers bound to the user of the current operation behavior, the number of devices for historical operation behaviors of the current user, the number of IP addresses of the historical operation behaviors of the current user, a difference between the information about the current operation behavior and information about the historical operation behaviors of the current user, and/or whether routing characteristic information of the current operation behavior is the same as routing characteristic information of the historical operation behaviors.

Preferably, the account theft risk evaluation module calculates an account theft risk value in combination with the account theft risk level of the device and the account theft risk level of the user of the current operation behavior, and identifies an account theft when the risk value is greater than a preset threshold.

Based on this, the present application further provides an account theft risk prevention and control system, including the risk identification apparatus described above, an account theft reporting apparatus, and a risk processing apparatus, wherein
the risk identification apparatus is configured to calculate an account theft risk value in an operation behavior platform, and identify an account theft when the risk value is greater than a preset threshold;
the account theft reporting apparatus is configured to report an account theft message to the risk processing apparatus and a user receiving device when the risk identification apparatus identifies an account theft; and
the risk processing apparatus is configured to block a stolen account of a user and intercept risk data associated with the stolen account when receiving the account theft message.

Preferably, the system includes a case database configured to store the risk data intercepted by the risk processing apparatus, such that the risk processing apparatus examines the risk data and the risk identification apparatus verifies the scoring model.

Compared with the prior art, the present application provides a solution of identifying an account theft risk based on the number of user identity analysis locations on a device, which collects all user identity information on a logon device in a period of time prior to an operation behavior, to analyze and count the number of user identity analysis locations on the device, and uses the count as an input variable of a risk scoring model to evaluate an account theft risk level, thereby effectively improving the capability of distinguishing an account theft risk. This is because: different identity analysis locations of all operation behavior users on a logon device in a recent period of time is a more effective and stable variable. If the device has multiple different identity analysis locations in a recent period of time when an operation behavior occurs, an account of the operation behavior has a high risk of being stolen. Meanwhile, on one device, the situation of operation behaviors of different users at a same location is more common than the situation of operation behaviors of different users at different locations, and therefore the variable can effectively eliminate some situations where operation behaviors are performed by multiple users but the risk is not high, thus helping improve the risk distinguishing capability and stability of the variable of the risk scoring model.

The features of the method, apparatus and system according to the present invention are defined in the independent claims, and the preferable features according to the present invention are defined in the dependent claims.

**Brief Description of the Drawings**

Various other advantages and benefits will become clear to those of ordinary skill in the art after they read the detailed description about the preferred implementations below. The accompanying drawings are only used for illustrating the preferred implementations, but should not be considered as a limitation to the present application. Moreover, in all the accompanying drawings, identical reference numerals are used to represent identical parts. In the drawings:

FIG. 1 shows a relation between the number of user identity analysis locations on a MAC device of a network platform and an account theft risk in 7 days prior to a current operation behavior;

FIG. 2 is a flowchart of an account theft risk identification method according to an embodiment of the present application;

FIG. 3 is a block diagram of an account theft risk identification apparatus according to an embodiment of the present application; and

FIG. 4 is a block diagram of an account theft risk prevention and control system according to an embodiment of the present application.

**Detailed Description**

In the following embodiments of the present application, such an input variable, i.e., the number of user identity analysis locations on a device in a period of time prior to a current operation behavior, is introduced into a risk scoring model, to improve the risk distinguishing capability of the variable of the model. This solution needs to establish a risk scoring model based on a data mining technology. Main modeling steps include determining a research object, determining a data source, taking samples, data exploration, model development, model verification, and so on. The present application focuses on constructing a suitable input variable for the scoring model. Because the scoring model is not the main focus of the present application, other details of modeling are not described; please refer to the conventional prior art for details.

In order to construct a suitable variable, the inventor of the present application collects massive data of operation behaviors of users on a network platform, to conduct data analysis and data mining. For example, for the platform, device information may be collected when each operation behavior of a user occurs, and the number of users having operation behaviors on the platform on these devices in a recent period of time may further be counted. An account theft risk may be identified according to the number of users on the platform on the devices. However, the problem of misjudgment often occurs. Based on the data analysis, the inventor of the present application finds that: for operation behaviors on the platform, on the same device, the situation of operation behaviors performed by people at the same location is more common than the situation of operation behaviors performed by people at different locations. Therefore, a more effective and stable variable is the number of different identity analysis locations of users conducting operation behaviors on the platform on the device in a recent period of time, and the analyzing granularity of the identity analysis location is preferably county (city). If the device has multiple different identity analysis locations in the recent period of time when an operation behavior occurs, such an operation behavior has an extremely high risk.

The foregoing rule is very stable in the operation behaviors on the platform. It may be appreciated that, this rule also applies to operation behaviors in other network applications. Accordingly, the "operation behavior" in the present application is a generalized concept, which is not limited to business behaviors of fund and goods transfer existing in the foregoing platform. Data exchanges between a user and a service platform and between different users in various network applications also belong to the scope of the "operation behavior" in the present application. For example, a logon event of a social network belongs to the "operation behavior" in the present application.

Because the number of user identity analysis locations on a device in a period of time prior to a current operation behavior is highly associated with an account theft risk, the inventor of the present application uses the number of user identity analysis locations on the device in a preset time period prior to an operation behavior as an input variable of a risk scoring model. Such a variable can eliminate some situations where operation behaviors are performed by multiple users but the risk is not high, thus improving the risk distinguishing capability and stability of the variable.

Accordingly, the inventor of the present application proposes the following basic conception: with the number of user identity analysis locations on a device in a period of time prior to a current operation behavior as an input variable, an account theft risk level of the device is evaluated by using a preset scoring model, to identify an account theft risk of a user more timely and effectively. This technical conception mainly involves content in three aspects: variable construction, an identification process, and model verification, which are further described in detail below.

1. Variable construction

When a valid variable is constructed, factors such as a variable subject, a variable object, a time interval, and a statistical index need to be considered, which are specifically described as follows:

(1) Variable subject: device information of a logon device of an operation behavior (such as an operation behavior on a payment platform). The device information may be identified by collecting a device identification code of the device, such as a Medium Access Control (MAC) physical address, a Unique Material Identifier (UMID), an Internet Protocol (IP) address, an International Mobile Equipment Identity (IMEI), a THREAD Identifier (TID), or a mobile phone number. Generally, for a Personal Computer (PC), a MAC, an IP and/or a UMID of the device may be collected, and for a mobile terminal, a MAC, an IMEI, a TID and/or a mobile phone number of the device may be collected. For specific collection and identification solutions, refer to the conventional prior art. Details are not described again.

(2) Variable object: a user identity analysis location on the logon device of the operation behavior. The user identity analysis location is usually determined according to a credential type and a credential number. For example, the first six digits of a Chinese resident ID card may represent a county (city). By identifying the first six digits, an administrative region where the user is from can be known, and thus the user identity analysis location is acquired.

(3) Time interval: a time interval prior to the operation behavior (e.g., 30 minutes, 2 hours, 12 hours, 1 day, 3 days, 7 days, and so on). The time interval differs a lot on various operation behavior platforms, and may be specifically determined according to factors such as an operation behavior request and an operation behavior nature. Details are not described herein.

(4) Statistical index: the number of user identity analysis locations on the device is counted. In a normal operation behavior environment, the number of user identity analysis locations on the device is generally small; if the number of user identity analysis locations on the device is relatively large, it indicates that the account theft risk is relatively high. This is a very reliable conclusion obtained according to analysis on massive data.

By combining the foregoing factors, the present application determines a specific variable as the number of different identity analysis locations of all users conducting operation behaviors on a device in a preset time interval prior to a current operation behavior. This statistical variable can increase the risk distinguishing capability of the model variable. The variable is highly associated with the account theft risk. If there are multiple different identity analysis locations on a device in a recent period of time prior to an operation behavior, the operation behavior on the device has a relatively high account theft risk.

2. Identification process

After the foregoing statistic is used as the input variable of the risk scoring model, an account theft risk may be identified based on user identity analysis locations on different devices. The advantage lies in that the risk distinguishing capability and stability of the variable can be improved. Specifically, the following procedures need to be followed during account theft risk identification.

(1) Acquisition of the number of identity analysis locations on the device, including:

a. Device information of a current operation behavior is acquired; and all user identity information of operation behaviors on the device in a specific time period (such as 3 days) prior to the operation behavior is acquired;

b. The identify information is analyzed to acquire corresponding user regions in the identity information, and the number of different user identity analysis locations on the device is counted. The user identity analysis location herein is generally identified as a city, and the "city" herein refers to an administrative region, and cannot be interpreted in a narrow sense as a concept opposite to rural area.

c. Processing in a special case: If there are multiple devices, respective numbers of user identity analysis locations are counted; if no device information can be acquired, the number of user identity analysis locations is set as 0.

(2) Evaluate a risk level
The risk level of the device is evaluated according to the number of user identity analysis locations. Specifically, after the number of user identity analysis locations on the device in the preset time period prior to the current operation behavior is acquired, it is input as a variable to the risk scoring model for scoring. After weights of various variables in the model are comprehensively considered, the account theft risk level of the device can be obtained. A high score indicates a high account theft risk, and in this case, the device needs to be monitored mainly.

3. Model verification

An influence of the input variable "the number of user identity analysis locations on the device in the preset time period prior to the current operation behavior" on the prediction effect of the risk scoring model needs to be verified. If the variable is effective, an account theft risk of a user can be automatically identified according to the process in the second step above; otherwise, the scoring model and the related input variable need to be adjusted again.

For the present application, the following factors need to be considered during model verification:

(1) Whether a historical operation behavior tag is a case. When introduced in the present application, the statistic "the number of user identity analysis locations on the device in the preset time period prior to the current operation behavior" needs to be associated with historical operation behavior data on the device, to prove that the introduced variable is effective. That is, whether the variable is effective needs to be measured by using historical operation behavior data; in other words, the historical operation behavior data may distinguish whether an account is stolen. It is assumed that a tag is "bad" when a historical operation behavior is account theft; otherwise, the tag is "good". If the account theft risk result identified through the second step is "bad", and the tag of the historical operation behavior is also "bad", or if the account theft risk result identified through the second step is "good", and the tag of the historical operation behavior is also "good", it is considered that the verification is successful; otherwise, the verification fails. If the probability of successful verification is high, it indicates that the number of user identity analysis locations on the device in the preset time period prior to the current operation behavior introduced as an input variable into the scoring model is effective, that is, the variable has a relatively high risk distinguishing capability.

(2) Quantification of the risk distinguishing capability

The risk distinguishing capability of the variable may further be quantified. Specifically, an account theft distinguishing capability index of "the number of identity analysis locations on the device in the preset time period prior to the current operation behavior" may be calculated piecewise to implement the quantification. These quantitative indexes mainly include two types: a lift and an interval Information Value (IV).

Formulas for calculating the account theft distinguishing capability index are shown as follows:

$$\text{Lift} = \text{interval stolen account transaction concentration/average stolen account transaction concentration}$$

$$WOE = \ln(\text{ratio of interval non-stolen account transactions to all non-stolen account transactions/ratio of interval stolen account transactions to all stolen account transactions}) \times 100$$

$$\text{Interval } IV = WOE \times (\text{ratio of interval non-stolen account transactions to all non-stolen account transactions - ratio of interval stolen account transactions to all stolen account transactions})$$

$IV$=sum of interval $IV$s

In the foregoing formulas, for ease of analysis, the Weight Of Evidence (WOE) is multiplied by a coefficient 100, and the meaning thereof is not essentially different from an index woe in data mining. It can be appreciated that, the "transaction" in the foregoing formula may be interpreted as a generalized network operation behavior, but is not limited to actual business activities such as fund payment and commodity transfer.

By calculating the risk distinguishing capability result of the variable "the number of identity analysis locations on the device in the preset time period prior to the current operation behavior" according to the foregoing formulas, the effectiveness of the variable introduced into the scoring model can be effectively verified. An account theft distinguishing capability index of "the number of user identity analysis locations on a MAC device in 7 days prior to a current operation behavior" is used as an example for description. The calculation result is as shown in Table 1:

Table 1: Account theft distinguishing capability of the number of user identity analysis locations on a MAC device in 7 days prior to an operation behavior

| Interval | The number of interval | The number of account theft | Interval account theft operation | Average account theft operation | Lift | Interval IV value | IV value |
|---|---|---|---|---|---|---|---|
| 0 | 578,007 | 1,934 | 0.3% | 1.0% | 0.33 | 32.07 | 171.74 |
| [1,2] | 704,478 | 4,602 | 0.7% | 1.0% | 0.65 | 7.9 | 171.74 |
| (2,327] | 48,887 | 6,756 | 13.8% | 1.0% | 13.82 | 131.77 | 171.74 |

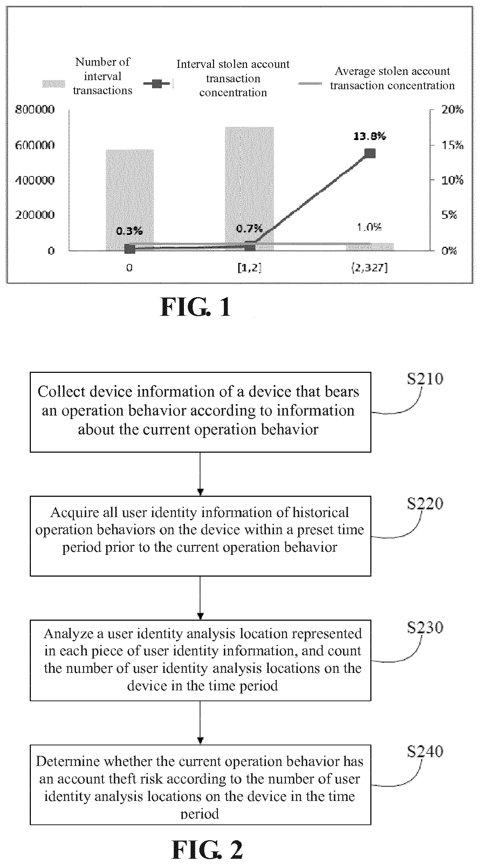

Table 1 may be presented in a graphical manner. Referring to FIG. 1, it shows a relation between the number of user identity analysis locations on a MAC device of a payment platform in 7 days prior to a current operation behavior and an account theft risk. It can be learned from Table 1 and FIG. 1 that, the lift is 13.82 when the number of user identity analysis locations on the device is greater than 2, that is, the capability of distinguishing the account theft risk according to the number of user identity analysis locations of operation behaviors on the MAC device in 7 days is lifted by 13.82 times. This indicates that the account theft distinguishing capability of the variable is very effective.

Similarly, for verification in other specific instances, the quantitative indexes are relatively desirable, which indicates that, by introducing such an input variable, i.e., the number of user identity analysis locations on a device in a period of time prior to a current operation behavior, into the risk scoring model to evaluate the account theft risk level, the present application can improve the risk distinguishing capability of the model variable, such that the account theft risk identification effect is relatively desirable.

It should be noted that, the IV values in Table 1 and FIG. 1 are relatively large, and an "over-prediction" phenomenon may occur in some cases. In order to eliminate such a phenomenon, in the present application, the risk of whether the user account is stolen is further comprehensively evaluated in combination with the total number of users on the device, the number of mobile phone numbers bound to the user of the current operation behavior, the number of devices for historical operation behaviors of the current user, the number of IP addresses of the historical operation behaviors of the current user, a difference between information about the current operation behavior and information about the historical operation behaviors of the current user, and/or whether routing characteristic information of the current operation behavior is the same as routing characteristic information of the historical operation behaviors, to eliminate the adverse effect caused by the "over-prediction" of a single variable.

The technical conception of using a statistic of the number of user identity analysis locations on a device in a preset time period prior to a current operation behavior to identify an account theft risk in the present application is illustrated systematically in principle above. Specific implementation solutions of the technical conception are further described in the following. Based on the foregoing analysis, after the risk scoring model and the input variable are determined and successfully verified, it is only necessary to deploy an application in a server section according to the second step described above for specific implementation, while it is unnecessary to repeat the modeling and verification.

Referring to FIG. 2, it is a flowchart of an account theft risk identification method according to an embodiment of the present application. As shown in FIG. 2, the risk identification method includes the following main steps, such as step 210 to step 240, which are described in detail below.

S210: Device information of a logon device of an operation behavior is collected according to information about the current operation behavior.

This step responds to the information about the current operation behavior, and a corresponding device of a server terminal collects the device information of the logon device of the operation behavior, which is generally obtained by collecting a device identification code of the device.

Generally, logon devices of client terminals are classified into multiple types. For example, a PC device usually has a MAC, an IP and/or a UMID, and a mobile terminal usually has a MAC, an IMEI, a TID and/or a mobile phone number, and so on. Therefore, content of the collected device information needs to be determined according to the type of the device. Generally, for a PC, a MAC, an IP and/or a UMID are/is collected; for a mobile terminal, a MAC, a TID and/or a mobile phone number are/is collected. For specific information collection and identification methods, please refer to the prior art. Details are not described herein.

It should be noted that, the current operation behavior in step S210 may be a login request for a user account, or may be a preset data operation request for a user account, and so on. The preset data operation request for a user account may include: a password modification request for the user account, a balance transfer request for the user account, and a goods transaction request for the user account. It can be appreciated that, the preset data operation request may be set by a server in advance, or may be set by a user through a client terminal in advance, which is not limited herein.

When a user initiates a login request for a user account at a client terminal, login information of the user generally includes a user identifier, information about the client terminal at which the user initiates the login request, and information about a server receiving the login request. Therefore, a login routing path of the user is acquired according to the login information of the user, and current routing characteristic information is extracted from the login routing path of the user. By comparing whether the routing characteristic information of the current operation behavior is the same as routing characteristic information of historical operation behaviors, an account theft risk level of the user of the current operation behavior may also be evaluated.

S220: All user identity information of historical operation behaviors on the device in a preset time period prior to the operation behavior is acquired.

It can be appreciated that, it is very complex and difficult to identify a risk of a single operation behavior of a single account, while it is a very effective method to identify a risk by means of mining an association among operation behaviors of multiple accounts. As described above, in the present application, the account theft risk of the device is evacuated according to the number of user identity analysis locations on the device in the preset time period prior to the current operation behavior. This requires extraction of all user identity information of historical operation behaviors on the device in this time period, and the extraction of user identity analysis locations is particularly important.

In an actual application, the time interval (such as 30 minutes, 2 hours, 12 hours, 1 day, 3 days, and 7 days) for users on the device may be generally determined according to factors such as an operation behavior platform, an operation behavior request, and an operation behavior nature. After user information of the historical operation behaviors in the time period is acquired, identity regions of the users may further be analyzed. After being counted, the number of user identity analysis locations on the device in the time period can be used as a variable of the risk scoring model for scoring.

S230. A user identity analysis location represented in each piece of user identity information is analyzed, and the number of user identity analysis locations on the device in the time period is counted.

As described above, the number of different identity analysis locations of users conducting operation behaviors on a payment platform of the device within a recent period of time prior to the current operation behavior is an effective and stable variable. Therefore, the statistic of the number of user identity analysis locations on the device in the time period may be input as a variable to the risk scoring model for scoring, to finally achieve the objective of identifying whether the user account is stolen.

It can be appreciated that, the distinguishing granularity of the user identity analyzing location is highly correlated to the output result of the scoring model. Preferably, city is taken as the distinguishing granularity of the user identity analysis location in the present application, such that the account theft risk identification effect is relatively desirable.

For many network operation behavior platforms, it is necessary to perform real name authentication during user account registration, which is good for improving network security. Therefore, step S230 of acquiring the user identity analysis location according to a credential type and a credential number in each piece of user registration information, and counting the number of user identity analysis locations on the device is specifically determining an analysis mode for the user identity analysis location according to a class of the credential type:

If the credential type is a Chinese domestic resident ID card, the first six digits thereof represents a county (city)-level administrative region, and therefore, the user identity analysis location may be acquired by simply analyzing the first six digits of each credential number, and the number of user identity analysis locations on the device is counted accordingly.

When the credential type is a Chinese domestic non-resident ID card (such as a certificate of officers) or a foreign credential (such as a passport), an administrative region where the user identity is located cannot be directly identified. However, such situations are relatively rare, and therefore, it may be simply presumed that each credential type or each credential number corresponds to one user identity analysis location, and the number of user identity analysis locations on the device is counted accordingly. Definitely, if a mode of numbering these credential types is obtained during modeling, the user identity analysis location may be obtained according to a specific credential number. Details are not described herein.

It should be noted that, the device information acquired in step S210 may have different situations: in most cases, multiple types of device information may be collected at the same time, for example, a MAC, an IMEI, and so on. However, due to technical reasons, the device information during the operation behavior cannot be collected in some scenarios or system constraints; or, the device information collected during the operation behavior is obviously a hotspot that needs to be eliminated, and so on. For these cases, the modes of analyzing and counting the number of user identity analysis locations on the device need to be adjusted correspondingly.

Therefore, in steps S220 to S230, it is necessary to determine the mode of counting the number of user identity analysis locations on the device according to a device quantity identified from the device identification code, which specifically includes:

if a unique device is identified, analyzing each user identity analysis location on the unique device, and counting the number of user identity analysis locations on the device;

if multiple devices are identified, separately analyzing each user identity analysis location on each device, and counting the number of user identity analysis locations on each device;

if no device is identified, setting the number of user identity analysis locations on the device as 0.

The number of user identity analysis locations on the device obtained in the foregoing manner is introduced as an input variable of the preset scoring model into the risk scoring model, to evaluate the account theft risk level of the device, such that the account theft risk distinguishing capability of the variable in the scoring model is measured by using historical operation behavior data.

S240: Whether the current operation behavior has an account theft risk is determined according to the number of user identity analysis locations on the device in the time period.

Generally, the number of user identity analysis locations on the device in the time period is used as an input variable of the preset scoring model to evaluate the account theft risk level of the device. The account theft risk level represents an account theft risk, and if the account theft risk level exceeds a specified threshold, it is identified that the account is stolen; otherwise, it is identified that the account is not stolen.

After the statistic of the number of user identity analysis locations on the device in the preset time period prior to the operation behavior is obtained according to steps S210 to S230 above, the statistic may be introduced into the risk scoring model for scoring, to obtain the account theft risk level of the device, thus identifying an account theft risk, such that processing measures are taken in time to eliminate the risk.

After the account theft risk level of the device is evaluated through the foregoing process, in order to further improve the account theft risk identification capability, the present application further evaluates an account theft risk level of a user of the current operation behavior in combination with factors such as the total number of users on the device, the number of mobile phone numbers bound to the user of the current operation behavior, the number of devices for historical operation behaviors of the current user, the number of IP addresses of the historical operation behaviors of the current user, a difference between the information about the current operation behavior and information about the historical operation behaviors of the current user, and/or whether routing characteristic information of the current operation behavior is the same as routing characteristic information of the historical operation behaviors. In this way, in combination with multiple factors, the account theft risk identification capability of the present application is significantly improved.

The present application calculates an account theft risk value in combination with the account theft risk level of the device and the account theft risk level of the user of the current operation behavior, identifies an account theft when the risk value is greater than a preset threshold, and outputs corresponding account theft prompt information when the account theft is identified, such that the operation behavior platform and the user perform processing in time, to eliminate the potential safety hazard of account theft, thus avoiding a property loss or other problems.

The account theft risk identification method (hereinafter referred to as method) is described in detail above. Based on this, the present application further provides an account theft risk identification apparatus (hereinafter referred to as apparatus) correspondingly, which is described in detail below.

By the way, for portions not described in detail in the apparatus of this embodiment, please refer to the description content of the method above. Similarly, for apparatus structures involved in the method above, reference may also be made to the following description content.

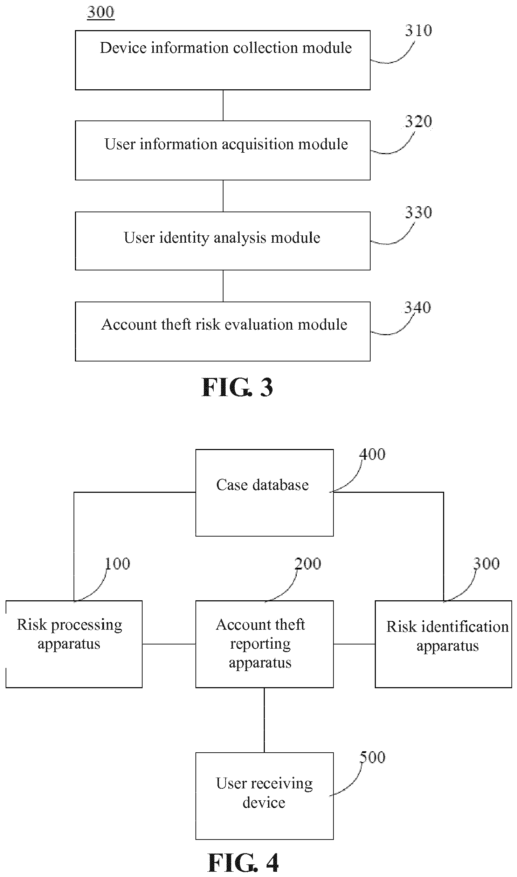

Referring to FIG. 3, it shows an account theft risk identification apparatus according to an embodiment of the present application. The apparatus 300 includes parts such as a device information collection module 310, a user information acquisition module 320, a user identity analysis module 330, and an account theft risk evaluation module 340, which are described hereinafter.

The device information collection module 310 may collect device information of a logon device of an operation behavior according to information about the current operation behavior. Herein, the device information collection module 310 acquires corresponding device information of the device by collecting a device identification code of the device, and specifically determines content of the collected device information according to a type of the device, that is, for a PC, a MAC, an IP and/or a UMID are/is collected; and for a mobile terminal, a MAC, an IMEI, a TID and/or a mobile phone number are/is collected.

The user information acquisition module 320 may acquire all user identity information of historical operation behaviors on the device within a preset time period prior to the operation behavior. After acquiring user information of historical operation behaviors in the corresponding time period, the user information acquisition module 320 provides the user information for the user identity analysis module 330, to analyze and obtain an identity region of each user and count the number of user identity analysis locations on the device in the time period; after that, the number of user identity analysis locations on the device in the time period may be used as a variable of a risk scoring model for scoring.

The user identity analysis module 330 may analyze a user identity analysis location represented in each piece of user identity information, and count the number of user identity analysis locations on the device in the time period. Particularly, the user identity analysis module 330 uses city as a distinguishing granularity of the user identity analysis location. The user identity information includes credential information in user registration information. The user identity analysis location is acquired according to a credential type and a credential number in each piece of user registration information, and the number of user identity analysis locations on the device is counted, which specifically includes: determining an analysis mode for the user identity analysis location according to a class of the credential type. Specifically, if the credential type is a Chinese domestic resident ID card, the first six digits of each credential number are analyzed to acquire the user identity analysis location and the number of user identity analysis locations on the device is counted accordingly; and if the credential type is a Chinese domestic non-resident ID card or a foreign credential, it is presumed that each credential type or each credential number corresponds to one user identity analysis location, and the number of user identity analysis locations on the device is counted accordingly.

In addition, the user identity analysis module 330 may determine a mode of counting the number of user identity analysis locations on the device according to a device quantity identified by the device information collection module 310 from a device identification code. That is, if a unique device is identified, analyzing is performed and the number of user identity analysis locations on the device is counted; if multiple devices are identified, analyzing is performed and the number of user identity analysis locations on each device is counted; and if no device is identified, the number of user identity analysis locations on the device is set as 0. The obtained number of user identity analysis locations on the device is used as an input variable of a preset scoring model of the account theft risk evaluation module 340, to evaluate an account theft risk level of the device.

The account theft risk evaluation module 340 may use the number of user identity analysis locations on the device in the time period as an input variable of the preset scoring model, to evaluate the account theft risk level of the device. The account theft risk evaluation module 340 further evaluates an account theft risk level of a user of the current operation behavior in combination with the total number of users on the device, the number of mobile phone numbers bound to the user of the current operation behavior, the number of devices for historical operation behaviors of the current user, the number of IP addresses of the historical operation behaviors of the current user, a difference between the information about the current operation behavior and information about the historical operation behaviors of the current user, and/or whether routing characteristic information of the current operation behavior is the same as routing characteristic information of the historical operation behaviors. Based on this, the account theft risk evaluation module 340 calculates an account theft risk value in combination with the account theft risk level of the device and the account theft risk level of the user of the current operation behavior, and identifies an account theft when the risk value is greater than a preset threshold.

The account theft risk identification apparatus of the present application is described above, which has a desirable distinguishing capability in account theft risk identification, and has relatively good stability in risk identification. Based on this, an account theft risk prevention and control system is correspondingly established in the present application, and is described briefly hereinafter.

Referring to FIG. 4, it shows an account theft risk prevention and control system according to an embodiment of the present application. The risk prevention and control system is applicable to prevention and control of operation behavior risks between a user (not shown in the figure) and an operation behavior platform (not shown in the figure). The system has a risk identification apparatus 300, an account theft reporting apparatus 200, a risk processing apparatus 100, and a case database 400.

A connection relation among the parts of the risk prevention and control system is as shown in FIG. 4, and a corresponding process for implementing functions is as follows: the risk identification apparatus 300 calculates an account theft risk value in an operation behavior platform, and identifies an account theft when the risk value is greater than a preset threshold; the account theft reporting apparatus 200 reports an account theft message to the risk processing apparatus 400 and a user receiving device (such as a mobile phone) 500 when the risk identification apparatus 100 identifies an account theft; the risk processing apparatus 100 blocks a stolen account of a user and intercepts risk data associated with the stolen account when receiving the account theft message; and the case database 400 stores the risk data intercepted by the risk processing apparatus 100, such that the risk processing apparatus 300 examines the risk data and the risk identification apparatus 300 verifies the scoring model.

For the risk identification apparatus 300 in the foregoing risk prevention and control system, please refer to the structure shown in FIG. 3. Other apparatuses may be chosen from conventional devices or applications. Such a risk prevention and control system can identify a user account theft risk in time, and once it is confirmed that an account is stolen, processing can be carried out in time, so that a secure network operation behavior environment can be better provided, thus achieving a desirable application value.

Numerous details are illustrated in the following description so that the present application is fully understood. However, the present application may be implemented in many other manners different from the manner described herein. Those skilled in the art may make similar generalizations without departing from the connotation of the present application. Therefore, the present application is not limited to the specific embodiments disclosed below.

Referring to FIG. 5, it shows an embodiment of the present application.

Although the present application is disclosed above by using preferred embodiments, but the preferred embodiments are not intended to limit the present application. Any person skilled in the art may make possible changes and modifications without departing from the scope of the present application. Therefore, the protection scope of the present application should be subject to the scope defined by the claims of the present application.

In a typical configuration, a computing device includes one or more processors (CPUs), an input/output interface, a network interface, and a memory.

The memory may include a volatile memory, a random access memory (RAM) and/or a non-volatile memory or the like in a computer readable medium, for example, a read-only memory (ROM) or a flash RAM. The memory is an example of the computer readable medium.

1. The computer readable medium includes non-volatile or volatile, and movable or non-movable media, and can implement information storage by means of any method or technology. Information may be a computer readable instruction, a data structure, and a module of a program or other data. A storage medium of a computer includes, for example, but is not limited to, a phase change memory (PRAM), a static random access memory (SRAM), a dynamic random access memory (DRAM), other types of random access memories (RAMs), a read-only memory (ROM), an electrically erasable programmable read-only memory (EEPROM), a flash memory or other memory technologies, a compact disc read-only memory (CD-ROM), a digital versatile disc (DVD) or other optical storages, a cassette tape, a magnetic tape/magnetic disk storage or other magnetic storage devices, or any other non-transmission medium, and can be used to store information accessible to the computing device. According to the definition in this text, the computer readable medium does not include transitory media, such as a modulated data signal and a carrier.

2. Those skilled in the art should understand that, the embodiments of the present application may be provided as a method, a system, or a computer program product. Therefore, the present application may be implemented in the form of a complete hardware embodiment, a complete software embodiment, or an embodiment combining software and hardware. Moreover, the present application may employ the form of a computer program product implemented on one or more computer usable storage media (including, but not limited to, a magnetic disk memory, a CD-ROM, an optical memory, and the like) including computer usable program code.

**Claims**

1. A method for identification of a stolen account on a device of a network platform, comprising:

   collecting (S210) device information of the device of the network platform, wherein a user is requesting to log-in to a user account on the device of the network platform;
   acquiring (S220) user identity information of users who performed operations on the device within a preset time period prior to the log-in , wherein the user identity information for each of the users comprises corresponding user registration information provided by each of the users during a real-name authentication, wherein each piece of the user identity information comprises a credential type and a credential number associated with a respective identification card of each of the users;
   analyzing user identity locations of the users based on the credential type and the credential number in each piece of the user registration information;
   counting (S230) a number of different user identity locations of the users on the device in the preset time period; and
   identifying (S240) the user account as stolen based on a determination that an account theft risk level of the device exceeds a specified threshold, wherein the account theft risk level of the device is calculated according to the number of different user identity locations of the users on the device in the preset time period.

2. The method of claim 1, wherein a user identity location of a user is determined according to the credential number.

3. The method of claim 1, wherein acquiring the user identity locations comprises:

   determining an analysis mode for the user identity locations according to a class of the credential type; and
   analyzing first six digits of each credential number to acquire the user identity analysis locations when the credential type is a Chinese domestic resident ID card, and counting the number of user identity locations on the device accordingly; or

wherein each credential type or each credential number corresponds to one user identity location when the credential type is a Chinese domestic non-resident ID card or a foreign credential, and counting the number of user identity locations on the device accordingly.

4. The method of claim 1, wherein collecting the device information of the device comprises:
acquiring corresponding device information of the device by collecting a device identification code of the device.

5. The method of claim 4, wherein acquiring the corresponding device information of the device by collecting the device identification code of the device comprises:

determining content of the collected device information according to a type of the device;
wherein the collected device information comprises a MAC, an IP and/or a UMID when the device is a PC; and the collected device information comprises a MAC, an IMEI, a TID and/or a mobile phone number when the device is a mobile terminal.

6. The method of claim 4, wherein acquiring the corresponding device information of the device by collecting the device identification code of the device comprises:

determining a mode of counting the number of user identity locations on the device according to a device quantity identified from the device identification code;
analyzing and counting, when a unique device is identified, the number of user identity locations on the device; or analyzing and counting, when multiple devices are identified, the number of user identity locations on each device; or
setting the number of user identity locations on the device as zero when no device is identified; and
using the obtained number of user identity locations on the device as an input variable of a preset scoring model, to evaluate the account theft risk level of the device.

7. The method of any of claims 1 to 6, wherein identifying the user account being requested for log-in by the user as stolen comprises:

evaluating the account theft risk level of the user in combination with a total number of users on the device, a number of mobile phone numbers bound to the user, a number of devices for historical operation of the user, a number of IP addresses of the historical operation of the user, a difference between information about the user requesting to log in the user account and information about the historical operation of the user; and/or
evaluating whether routing characteristic information of the requested log-in into the user account is the same as routing characteristic information of the historical operation;
calculating an account theft risk value as a combination of the account theft risk level of the device and the account theft risk level of the user; and
identifying the user account as stolen when the account theft risk value is greater than a preset threshold.

8. An apparatus (300) for identifying stolen accounts, the apparatus implemented by hardware or a combination of software and hardware, the apparatus configured to perform the method of any one of claims 1 to 7.

9. A system for preventing and controlling accounts on devices within a network platform, the system comprising a risk identification apparatus (300) according to claim 8, an account theft reporting apparatus (200), and a risk processing apparatus (100), wherein
the risk identification apparatus (300) is configured to calculate an account theft risk value in the network platform, and identify an account as stolen when the account theft risk value is greater than a preset threshold;
the account theft reporting apparatus (200) is configured to report an account theft message to the risk processing apparatus and a user receiving device (500) when the risk identification apparatus (300) identifies the account theft; and
the risk processing apparatus (100) is configured to block the stolen account of the user and intercept risk data associated with the stolen account when receiving the account theft message.

10. The system of claim 9, wherein the system comprises a case database (400) configured to store the risk data intercepted by the risk processing apparatus (100), such that the risk processing apparatus (100) examines the risk data and the risk identification apparatus (300) verifies a preset scoring model for scoring statistic data of the number of user identity locations on the device in the preset time period and for obtaining the account theft risk level of the

device.

**Patentansprüche**

1. Verfahren zur Identifizierung eines gestohlenen Kontos auf einer Vorrichtung einer Netzwerkplattform, umfassend:

   Sammeln (S210) von Vorrichtungsinformationen der Vorrichtung der Netzwerkplattform, wobei ein Benutzer aufgefordert wird, sich in ein Benutzerkonto auf der Vorrichtung der Netzwerkplattform einzuloggen;
   Erfassen (S220) von Benutzeridentitätsinformationen von Benutzern, die Operationen auf der Vorrichtung innerhalb einer vorgegebenen Zeitdauer vor dem Login durchgeführt haben, wobei die Benutzeridentitätsinformationen für jeden der Benutzer entsprechende Benutzerregistrierungsinformationen umfassen, die von jedem der Benutzer während einer Echtnamensauthentifizierung bereitgestellt werden, wobei jede Benutzeridentitätsinformation einen Anmeldeinformationstyp und eine Anmeldeinformationszahl umfasst, die einer jeweiligen Identifizierungskarte von jedem der Benutzer zugeordnet ist;
   Analysieren von Benutzeridentitätsstandorten der Benutzer basierend auf dem Anmeldeinformationstyp und der Anmeldeinformationszahl in jeder Benutzerregistrierungsinformation;
   Zählen (S230) einer Anzahl verschiedener Benutzeridentitätsstandorte der Benutzer auf der Vorrichtung in der vorgegebenen Zeitdauer; und
   Identifizieren (S240) des Benutzerkontos als gestohlen basierend auf einer Ermittlung, dass eine Kontodiebstahl-Risikostufe der Vorrichtung einen angegebenen Schwellenwert überschreitet, wobei die Kontodiebstahl-Risikostufe der Vorrichtung gemäß der Anzahl unterschiedlicher Benutzeridentitätsstandorte der Benutzer auf der Vorrichtung in der vorgegebenen Zeitdauer berechnet wird.

2. Verfahren nach Anspruch 1, wobei ein Benutzeridentitätsstandort eines Benutzers gemäß der Anmeldeinformationszahl ermittelt wird.

3. Verfahren nach Anspruch 1, wobei das Erfassen der Benutzeridentitätsstandorte umfasst:

   Ermitteln eines Analysemodus für die Benutzeridentitätsstandorte gemäß einer Klasse des Anmeldeinformationstyps; und
   Analysieren der ersten sechs Ziffern jeder Anmeldeinformationszahl, um die Analysestandorte der Benutzeridentität zu erfassen, wenn der Anmeldeinformationstyp eine ID-Karte eines chinesischen inländischen Gebietsansässigen ist, und entsprechend Zählen der Anzahl von Benutzeridentitätsstandorten auf der Vorrichtung; oder
   wobei jeder Anmeldeinformationstyp oder jede Anmeldeinformationszahl einem Benutzeridentitätsstandort entspricht, wenn der Anmeldeinformationstyp eine ID-Karte eines chinesischen inländischen Gebietsfremden oder ausländische Anmeldeinformationen sind, und entsprechend Zählen der Anzahl von Benutzeridentitätsstandorten auf der Vorrichtung; oder

4. Verfahren nach Anspruch 1, wobei das Sammeln der Vorrichtungsinformationen der Vorrichtung umfasst:
   Erfassen entsprechender Vorrichtungsinformationen der Vorrichtung durch Sammeln eines Vorrichtungsidentifizierungscodes der Vorrichtung.

5. Verfahren nach Anspruch 4, wobei das Erfassen der entsprechenden Vorrichtungsinformationen der Vorrichtung durch Sammeln des Vorrichtungsidentifizierungscodes der Vorrichtung umfasst:

   Ermitteln des Inhalts der gesammelten Vorrichtungsinformationen gemäß einem Typ der Vorrichtung;
   wobei die gesammelten Vorrichtungsinformationen eine MAC, eine IP und/oder eine UMID umfassen, wenn die Vorrichtung ein PC ist; und
   die gesammelten Vorrichtungsinformationen eine MAC, eine IMEI, eine TID und/oder eine Mobiltelefonnummer umfassen, wenn die Vorrichtung ein mobiles Endgerät ist:

6. Verfahren nach Anspruch 4, wobei das Erfassen der entsprechenden Vorrichtungsinformationen der Vorrichtung durch Sammeln des Vorrichtungsidentifizierungscodes der Vorrichtung umfasst:

   Ermitteln eines Modus zum Zählen der Anzahl von Benutzeridentitätsstandorten auf der Vorrichtung entsprechend einer Vorrichtungsmenge, die aus dem Vorrichtungsidentifizierungscode identifiziert wird;

Analysieren und Zählen der Anzahl von Benutzeridentitätsstandorten auf der Vorrichtung, wenn eine einzige Vorrichtung identifiziert wird; oder

Analysieren und Zählen der Anzahl von Benutzeridentitätsstandorten auf jeder Vorrichtung, wenn mehrere Vorrichtungen identifiziert werden; oder

Einstellen der Anzahl von Benutzeridentitätsstandorten auf der Vorrichtung auf null, wenn keine Vorrichtung identifiziert wird; und

Verwenden der erhaltenen Anzahl von Benutzeridentitätsstandorten auf der Vorrichtung als Eingabevariable einer vorgegebenen Bewertungsmethode, um die Kontodiebstahl-Risikostufe der Vorrichtung zu bewerten.

7. Verfahren nach einem der Ansprüche 1 bis 6, wobei das Identifizieren des Benutzerkontos, das zum Einloggen durch den Benutzer angefordert wird, umfasst:

Bewerten der Kontodiebstahl-Risikostufe des Benutzers in Kombination mit einer Gesamtanzahl von Benutzern auf der Vorrichtung, einer Anzahl von Mobiltelefonnummern, die an den Benutzer gebunden sind, einer Anzahl von Vorrichtungen für eine historische Operation des Benutzers, einer Anzahl von IP-Adressen der historischen Operation des Benutzers, einem Unterschied zwischen Informationen über den Benutzer, der sich in das Benutzerkonto einloggen will und Informationen über die historische Operation des Benutzers; und/oder

Bewerten, ob charakteristische Routinginformationen des angeforderten Einloggens in das Benutzerkonto dieselben sind wie charakteristische Routinginformationen der historischen Operation;

Berechnen einer Kontodiebstahl-Risikostufe als Kombination der Kontodiebstahl-Risikostufe der Vorrichtung und der Kontodiebstahl-Risikostufe des Benutzers; und

Identifizieren des Benutzerkontos als gestohlen, wenn der Kontodiebstahl-Risikowert größer ist als ein vorbestimmter Schwellenwert.

8. Vorrichtung (300) zum Identifizieren gestohlener Konten, wobei die Vorrichtung durch Hardware oder eine Kombination aus Software und Hardware implementiert ist, die Vorrichtung konfiguriert ist, um das Verfahren nach einem der Ansprüche 1 bis 7 durchzuführen.

9. System zum Verhindern und Kontrollieren von Konten auf Vorrichtungen innerhalb einer Netzwerkplattform, wobei das System eine Risikoidentifizierungsvorrichtung (300) nach Anspruch 8, eine Kontodiebstahlmeldungsvorrichtung (200) und eine Risikoverarbeitungsvorrichtung (100) umfasst, wobei

die Risikoidentifizierungsvorrichtung (300) konfiguriert ist, um einen Kontodiebstahl-Risikowert auf der Netzwerkplattform zu berechnen und ein Konto als gestohlen zu identifizieren, wenn der Kontodiebstahl-Risikowert größer ist als ein vorbestimmter Schwellenwert;

die Kontodiebstahlmeldevorrichtung (200) konfiguriert ist, um eine Kontodiebstahlnachricht an die Risikoverarbeitungsvorrichtung und eine Benutzerempfangsvorrichtung (500) zu melden, wenn die Risikoidentifizierungsvorrichtung (300) den Kontodiebstahl identifiziert; und

die Risikoverarbeitungsvorrichtung (100) konfiguriert ist, um das gestohlene Konto des Benutzers zu blockieren und Risikodaten, die dem gestohlenen Konto zugeordnet sind, beim Empfangen der Kontodiebstahlsmeldung abzufangen.

10. System nach Anspruch 9, wobei das System eine Falldatenbank (400) umfasst, die konfiguriert ist, um die Risikodaten zu speichern, die von der Risikoverarbeitungsvorrichtung (100) abgefangen werden, sodass die Risikoverarbeitungsvorrichtung (100) die Risikodaten untersucht und die Risikoidentifizierungsvorrichtung (300) eine vorbestimmte Bewertungsmethode zum Bewerten statistischer Daten der Anzahl von Benutzeridentitätsstandorten auf der Vorrichtung in der vorbestimmten Zeitdauer und zum Erhalten der Kontodiebstahl-Risikostufe der Vorrichtung überprüft.

## Revendications

1. Procédé d'identification d'un compte volé sur un dispositif d'une plateforme de réseau, comprenant :

la collecte (S210) d'informations de dispositif du dispositif de la plateforme de réseau, dans lequel un utilisateur demande à se connecter à un compte utilisateur sur le dispositif de la plateforme de réseau ;

l'acquisition (S220) d'informations d'identité d'utilisateur des utilisateurs qui ont effectué des opérations sur le dispositif pendant une période prédéfinie avant la connexion, dans lequel les informations d'identité d'utilisateur pour chacun des utilisateurs comprennent des informations d'enregistrement d'utilisateur correspondantes fournies par chacun des utilisateurs pendant une authentification de nom réel, dans lequel chaque information des informations d'identité d'utilisateur comprend un type de justificatif d'identité et un numéro de justificatif d'identité associés à une carte d'identification respective de chacun des utilisateurs ;

l'analyse d'emplacements d'identité d'utilisateur des utilisateurs en fonction du type de justificatif d'identité et du numéro de justificatif d'identité dans chaque information des informations d'enregistrement d'utilisateur ;

le décompte (S230) d'un nombre d'emplacements d'identité d'utilisateur différents des utilisateurs sur le dispositif pendant la période prédéfinie ; et

l'identification (S240) du compte utilisateur comme étant volé en fonction d'une détermination selon laquelle un niveau de risque de vol de compte du dispositif dépasse un seuil prédéfini, dans lequel le niveau de risque de vol de compte du dispositif est calculé en fonction du nombre d'emplacements d'identité d'utilisateur différents des utilisateurs sur le dispositif pendant la période prédéfinie.

2. Procédé selon la revendication 1, dans lequel un emplacement d'identité d'utilisateur d'un utilisateur est déterminé en fonction du numéro de justificatif d'identité.

3. Procédé selon la revendication 1, dans lequel l'acquisition des emplacements d'identité d'utilisateur comprend :

la détermination d'un mode d'analyse pour les emplacements d'identité d'utilisateur conformément à une classe du type de justificatif d'identité ; et

l'analyse des six premiers chiffres de chaque numéro de justificatif d'identité pour acquérir les emplacements d'analyse d'identité d'utilisateur lorsque le type de justificatif d'identité est une carte d'identité de résident chinois, et le décompte du nombre d'emplacements d'identité d'utilisateur sur le dispositif en conséquence ; ou

dans lequel chaque type de justificatif d'identité ou chaque numéro de justificatif d'identité correspond à un emplacement d'identité d'utilisateur lorsque le type de justificatif d'identité est une carte d'identité de résident non chinois ou un justificatif d'identité étranger, et le décompte du nombre d'emplacements d'identité d'utilisateur sur le dispositif en conséquence.

4. Procédé selon la revendication 1, dans lequel la collecte des informations de dispositif du dispositif comprend : l'acquisition d'informations de dispositif correspondantes du dispositif en collectant un code d'identification de dispositif du dispositif.

5. Procédé selon la revendication 4, dans lequel l'acquisition des informations de dispositif correspondantes du dispositif en collectant le code d'identification de dispositif du dispositif comprend :

la détermination du contenu des informations de dispositif collectées conformément à un type du dispositif ;

dans lequel les informations de dispositif collectées comprennent un MAC, un IP et/ou un UMID lorsque le dispositif est un PC ; et

les informations de dispositif collectées comprennent un MAC, une IMEI, une TID et/ou un numéro de téléphone mobile lorsque le dispositif est un terminal mobile.

6. Procédé selon la revendication 4, dans lequel l'acquisition des informations de dispositif correspondantes du dispositif en collectant le code d'identification de dispositif du dispositif comprend :

la détermination d'un mode de décompte du nombre d'emplacements d'identité d'utilisateur sur le dispositif conformément à une quantité de dispositif identifiée à partir du code d'identification de dispositif ;

l'analyse et le décompte, lorsqu'un dispositif unique est identifié, du nombre d'emplacements d'identité d'utilisateur sur le dispositif ; ou

l'analyse et le décompte, lorsque des dispositifs multiples sont identifiés, du nombre d'emplacements d'identité d'utilisateur sur chaque dispositif ; ou

la mise à zéro du nombre d'emplacements d'identité d'utilisateur sur le dispositif lorsqu'aucun dispositif n'est identifié ; et

l'utilisation du nombre obtenu d'emplacements d'identité d'utilisateur sur le dispositif comme une variable d'entrée d'un modèle de notation prédéfini, pour évaluer le niveau de risque de vol de compte du dispositif.

7. Procédé selon l'une quelconque des revendications 1 à 6, dans lequel l'identification du compte utilisateur, auquel l'utilisateur demande à se connecter, comme étant volé comprend :

l'évaluation du niveau de risque de vol de compte de l'utilisateur en combinaison avec un nombre total d'utilisateurs sur le dispositif, un certain nombre de numéros de téléphones mobiles liés à l'utilisateur, un certain nombre de dispositifs pour l'opération d'historique de l'utilisateur, un certain nombre d'adresses IP de l'opération d'historique de l'utilisateur, une différence entre des informations sur l'utilisateur demandant à se connecter au compte d'utilisateur et des informations sur l'opération d'historique de l'utilisateur ; et/ou

l'évaluation selon laquelle des informations de caractéristique de routage de la connexion demandée dans le compte utilisateur sont identiques ou non à des informations de caractéristique de routage de l'opération d'historique ;

le calcul d'une valeur de risque de vol de compte en tant que combinaison du niveau de risque de vol de compte du dispositif et du niveau de risque de vol de compte de l'utilisateur ; et

l'identification du compte utilisateur comme étant volé lorsque la valeur du risque de vol de compte est supérieure à un seuil prédéfini.

8. Appareil (300) permettant d'identifier des comptes volés, l'appareil étant mis en œuvre par du matériel ou une combinaison de logiciel et de matériel, l'appareil étant configuré pour exécuter le procédé selon l'une quelconque des revendications 1 à 7.

9. Système permettant d'empêcher et de contrôler des comptes sur des dispositifs au sein d'une plateforme de réseau, le système comprenant un appareil d'identification de risque (300) selon la revendication 8, un appareil de rapport de vol de compte (200) et un appareil de traitement de risque (100), dans lequel

l'appareil d'identification de risque (300) est configuré pour calculer une valeur de risque de vol de compte dans la plateforme de réseau, et pour identifier un compte comme étant volé lorsque la valeur de risque de vol de compte est supérieure à un seuil prédéfini ;

l'appareil de rapport de vol de compte (200) est configuré pour rapporter un message de vol de compte à l'appareil de traitement de risque et à un dispositif de réception utilisateur (500) lorsque l'appareil d'identification de risque (300) identifie le vol de compte ; et

l'appareil de traitement de risque (100) est configuré pour bloquer le compte volé de l'utilisateur et intercepter des données de risque associées au compte volé lors de la réception du message de vol de compte.

10. Système selon la revendication 9, dans lequel le système comprend une base de données de cas (400) configurée pour stocker les données de risque interceptées par l'appareil de traitement de risque (100), de sorte que l'appareil de traitement de risque (100) examine les données de risque et l'appareil d'identification de risque (300) vérifie un modèle de notation prédéfini permettant de noter des données statistiques du nombre d'emplacements d'identité d'utilisateur sur le dispositif pendant la période prédéfinie et permettant d'obtenir le niveau de risque de vol de compte du dispositif.

**FIG. 1**

**FIG. 2**

300

| Device information collection module | 310 |

| User information acquisition module | 320 |

| User identity analysis module | 330 |

| Account theft risk evaluation module | 340 |

**FIG. 3**

| Case database | 400 |

| Risk processing apparatus 100 | Account theft reporting apparatus 200 | Risk identification apparatus 300 |

| User receiving device | 500 |

**FIG. 4**

**REFERENCES CITED IN THE DESCRIPTION**

**Patent documents cited in the description**

- US 8904496 B